# EUROPEAN PATENT SPECIFICATION

(11) **EP 2 019 030 B1**
(45) Date of publication and mention of the grant of the patent: **23.09.2009**
(21) Application number: 08010195.9
(22) Date of filing: 04.06.2008
(51) Int. Cl.: B62J 17/04

(54) **Motorcycle having a wind screen structure**
Motorrad mit einer Struktur einer Windschutzscheibe
Motocyclette avec une structure de pare-brise

(30) Priority: 26.07.2007 JP 2007194051
(43) Date of publication of application: 28.01.2009
(73) Proprietor: HONDA MOTOR CO., LTD., Tokyo 107-8556 (JP)
(72) Inventor: Inoue, Yoshihiro, Wako-shi Saitama 351-0193 (JP); Nakajima, Jun, Wako-shi Saitama 351-0193 (JP)
(74) Representative: Liska, Horst

(56) References cited:
- EP-A- 1 752 367
- JP-A- 2006 224 908
- US-A1- 2006 028 045

## Description

### Technical Field

The present invention relates to a motorcycle having a wind screen structure which slidably supports a wind screen on an upper cowl covering a body front part.

### Background Art

In some motorcycles, a wind screen is slidably supported on an upper cowl covering the body front part. In this type of motorcycle, a pair of left and right rails are located below the upper cowl, a slider is slidably attached to each rail, the upper cowl has an opening for passage of each slider, and a wind screen is attached through a connecting member above the sliders (for example, see Patent Document No. JP-A-2003-81160).

A motorcycle having a wind screen structure according to the preamble of claim 1 is known from EP 1 752 367 A2.

JP 2006-224908 A discloses a windscreen structure having an elevating device for a windscreen, which comprises a center rail provided to decline forward at the widthwise approximate center of a vehicle body, a center guide means moving along the center rail, a side rail provided on both sides and the rear side of the center rail so as to decline forward approximately in parallel with the center rail in a plan view, left/right guide means moving along the side rails, a synchronizing member for synchronizing the center guide means and the left/right side guide means and supporting the windscreen, and a driving means for vertically reciprocating and driving the synchronizing member or the center guide means.

US 2006/028045 A1 discloses an apparatus for driving a windscreen of vehicles that moves the windscreen for vehicles up and down. The apparatus comprises a pair of guide rails fixed to the right and left side of the vehicle, front and rear guide means moveably located along each guide rail, right and left carrier plates supported by the front and rear guide means supporting a right side and a left side of the windscreen, and an actuator which reciprocates the right and left carrier plates along the guide rails.

### Problem to be Solved by the Invention

However, in the above constitution, the following problem sometimes has occurred: when a seal rubber in sliding contact with the left and right sides of the slider is located in the opening of the upper cowl, the seal rubber's portion expanded by the slider is largely deformed and relatively large gaps are made at the front and back of the slider in the sliding direction.

The present invention has been made in view of the above circumstances and has an object to provide a motorcycle having a wind screen structure which reduces the size of the gap in the seal rubber.

### Means for Solving the Problem

In order to solve the above problem, the present invention is characterized in that a motorcycle having a wind screen structure which is adapted to slidably support a wind screen on an upper cowl covering a body front part, includes a rail located below the upper cowl and a slider which is engageable with the rail and is slidable, wherein the upper cowl has an opening for the passage of the slider and the wind screen is coupled with the top of the slider; in the opening, a seal rubber which extends from both sides of it and is in sliding contact with the slider is located; and a rib which extends downward from the opening to suppress deformation of a base part of the seal rubber is provided.

According to the present invention, since, in the opening of the upper cowl, a seal rubber which extends from both sides of it and is in sliding contact with the slider is located, and a rib which extends downward from the opening to suppress deformation of the base part of the seal rubber is provided, when the seal rubber is expanded by the slider, the rib suppresses deformation of the base part of the seal rubber and reduces the size of the gap in the seal rubber.

In this case, it is preferable that the tips of a pair of lip parts which extends from the base part of the seal rubber lie one over the other. According to this constitution, since the tips of the lip parts lie one over the other, the seal rubber's gap in an area which is not in sliding contact with the slider is unfailingly closed and even the gap as expanded by the slider is closed in a position near the slider and made smaller.

In this case, it is preferable that the pair of lip parts which extend from the base part of the seal rubber are located along the rail and the lip parts are in sliding contact with the slider in the vicinity of the rail. According to this constitution, the lip parts are always in sliding contact with the same areas of the slider and the deformed shape of the lip parts is stable and the lip parts are in sliding contact with a narrow area of the slider near the rail so that the gap as expanded by the slider can be smaller.

In this case, it is preferable that a gap closing part which has almost the same shape as a gap in the seal rubber as formed by the slider is provided at an end part of the slider in a sliding direction. According to this constitution, the gap closing part lies over the seal rubber's gap as expanded by the slider so that the gap between the seal rubber and the slider can be very small.

### Effect of the Invention

In the present invention, since in the opening of the upper cowl, a seal rubber which extends from both sides of it and is in sliding contact with the slider is located and a rib which extends downward from the opening to suppress deformation of the base part of the seal rubber is provided, when the seal rubber is expanded by the slider, the seal rubber's gap is made smaller.

In addition, since the tips of the pair of lip parts which extend from the base part of the seal rubber lie one over the other, the seal rubber's gap in an area which is not in sliding contact with the slider is unfailingly closed and the seal rubber's gap as expanded by the slider is made smaller.

Furthermore, since the pair of lip parts which extend from the base part of the seal rubber are located along the rail and the lip parts are in sliding contact with the slider in the vicinity of the rail, the deformed shape of the lip parts is stable and the lip parts are in sliding contact with a narrow area of the slider near the rail so that the seal rubber's gap as expanded by the slider can be smaller.

Also, since a gap closing part which has almost the same shape as a gap in the seal rubber as formed by the slider is provided at an end part of the slider in a sliding direction, the gap between the seal rubber and the slider can be very small.

### Brief Description of the Drawings

Fig. 1 is a side view of the motorcycle according to this embodiment.
Fig. 2 is a perspective view showing the motorcycle wind screen and its vicinity.
Fig. 3 is a perspective view showing the motorcycle inner cowl and its vicinity.
Fig. 4 is a view showing the moving mechanism for the wind screen.
Fig. 5 is a sectional view showing the rail, slider and its vicinity
Fig. 6 is a sectional view taken along the line VI-VI in Fig. 5.
Fig. 7(A) is a plan view of the seal rubber and Fig. 7(B) is a side view of it.
Fig. 8(A) is a sectional view taken along the line VII-VII in Fig. 7(B) and Fig. 8(B) is a sectional view of the inner cowl and the rail.
Fig. 9 is a sectional view showing the moving mechanism except the slider, and the inner cowl.
Fig. 10 is a sectional view showing the moving mechanism except the slider, and the inner cowl.
Fig. 11 is a sectional view showing the moving mechanism and the inner cowl.

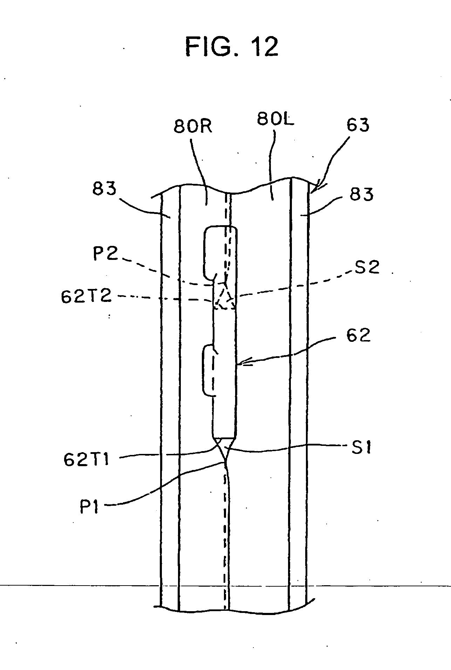

Fig. 12 is a view showing that the slider is inserted in the seal rubber.
Fig. 13 is a sectional view showing the moving mechanism and the inner cowl.
Fig. 14 is a view which explains molding of the seal rubber.
Fig. 15 is a view which explains a slider according to a variation of the embodiment.

### Best Mode for Carrying Out the Invention

Next, an embodiment of the present invention will be described referring to the accompanying drawings. In the explanation, "front," "rear (back)," "left"," "right," "up (or above)" and "down (or below)" refer to directions with respect to the motorcycle body.

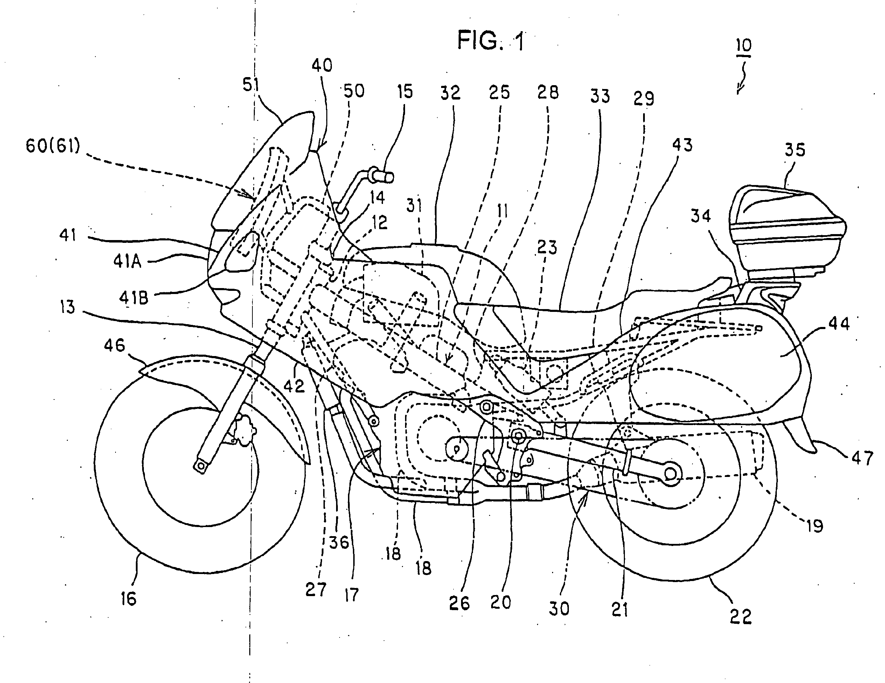

Fig. 1 is a side view of a motorcycle according to the embodiment of the present invention.

The motorcycle 10 includes: a body frame 11; a pair of left and right front forks 13 rotatably supported by a head pipe 12 attached to the front end of the body frame 11; a steering handlebar 15 attached to a top bridge 14 which supports the upper ends of the front forks 13; a front wheel 16 rotatably supported by the front forks 13; an engine 17 supported by the body frame 11; an exhaust muffler 19 coupled with the engine 17 through an exhaust pipe 18; a rear swing arm 21 vertically swingably supported by a pivot 20 on the rear lower part of the body frame 11; and a rear wheel 22 rotatably supported on the rear end of the rear swing arm 21, with a rear cushion 23 between the rear swing arm 21 and the body frame 11.

The body frame 11 includes: a pair of left and right main frames 25 which transversely diverge from the head pipe 12 and extend rearward and obliquely downward; a pivot plate 26 connected with the rear part of the main frame 25; a down tube 27 which extends downward from the head pipe 12, then curves and extends rearward and is connected with the pivot plate 26; and a seat rail 29 which extends rearward from a stay 28 attached to the pivot plate 26. An engine 17 is held in a space surrounded by the main frames 25, pivot plate 26 and down tube 27, and a power transmission 30 which transmits power of the engine 17 to the rear wheel 22 is constituted.

The main frames 25 support an air cleaner 31 and a fuel tank 32 and the air cleaner 31 is coupled with the engine 17 through a throttle body (not shown). An injector which emits a jet of fuel from the fuel tank 32 is attached to this throttle body, clean air supplied from the air cleaner 31 is mixed with fuel through this injector and air-fuel mixture is supplied to the engine 17. The engine 17 of the motorcycle 10 is a so-called V type 2-cylinder engine.

The seat rail 29 supports a rider seat 33, a grab rail 34 and a trunk box 35 and the down tube 27 supports a radiator 36.

The motorcycle 10 has a body cover 40 which covers the body, and the body cover 40 includes an upper cowl (also called a front fairing) 41, a pair of left and right side covers 42 which cover the sides of the body, and a rear seat cowl 43 which covers the rear part of the body. Also, a front fender 46 which covers the front wheel 16 is attached to the front fork 13 and a rear fender 47 which covers the rear wheel 22 is attached to the rear seat cowl 43.

The upper cowl 41 is fixed on the head pipe 12 through a bracket 50; a head light 41A is provided on the front of the upper cowl 41 and winkers 41 B are provided at its left and right ends; a wind screen 51, located above the head light 41A, is so shaped as to adjust the air from ahead of the body to prevent it from directly reaching the rider and let it flow around the rider.

This wind screen 51 is a movable screen whose height is adjustable by a moving mechanism 60 which will be described later. Therefore, for example, if the wind screen is adjusted to high position, it exerts a high wind protection effect suitable for high speed running (effect of reducing the wind pressure against the rider and wind noise and adjusting the air flow); if the wind screen 51 is adjusted to a low position, the wind protection effect is adjusted to a level suitable for low-to-middle speed running where the rider feels an adequate level of wind pressure and the comfort in running is thus increased.

The side covers 42 are provided with an air exhaust port (not shown) which, after guiding the air from ahead of the vehicle to the vicinities of the radiator 36 and engine 17, forces the air out so as to prevent it from directly reaching the rider, and so shaped as to adjust the air from ahead of the vehicle to prevent it from directly reaching the rider's knees or the like and let it flow around the knees.

In addition, a pair of left and right saddlebacks 44 are formed integrally with the rear seat cowl 43. In other words, the motorcycle 10 provides a large-capacity carrying space through these saddlebacks 44 and the trunk box 35 and achieves an excellent wind protection effect due to the relatively large body cover 40 and the wind screen 51, thus constituting a vehicle suitable for long-distance running (so-called the tourer type).

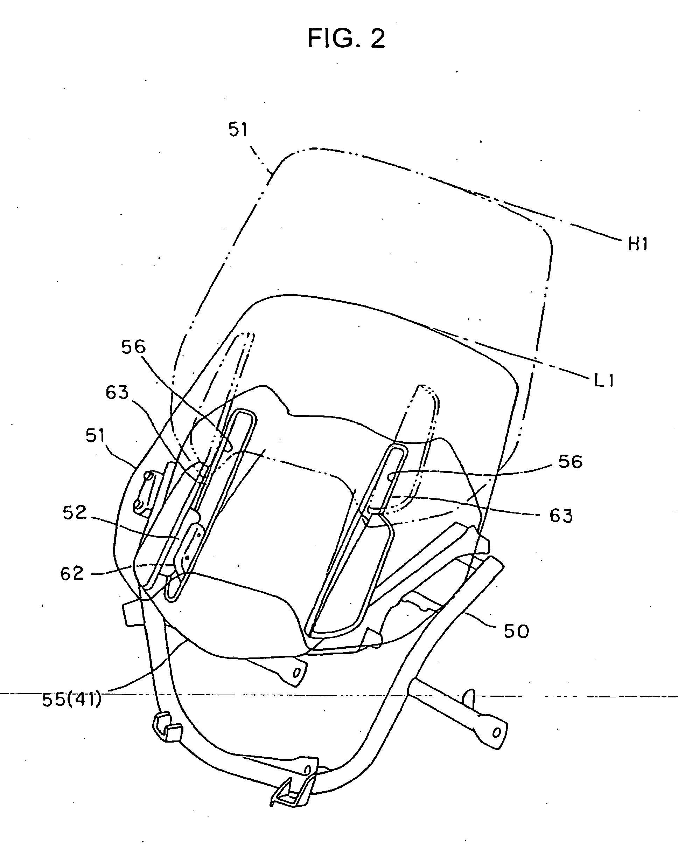

Next, the wind screen 51 and its vicinity will be described.
As shown in Fig. 2, the upper cowl 41 has an inner cowl 55 which is fixed on the bracket 50 in front of the handlebar 15 in a way to cover the handlebar 15, and the wind screen 51 is located vertically movably on the front side of the inner cowl 55.

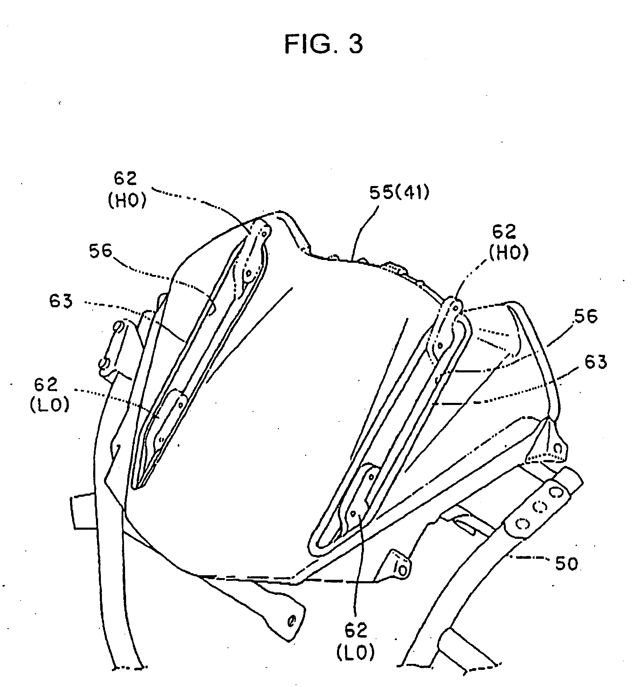

The inner cowl 55 is part of the upper cowl 41 and also functions as a cover which covers the front sides of meters located in front of the handlebar 15, and as shown in Fig. 3, it has a pair of left and right openings 56, 56. The pair of openings 56, 56 extend vertically along a pair of left and right rails 61, 61 located below the inner cowl 55 which will be described later and enable sliders 62, 62 to engage with the rails 61, 61 and slide there.

Here, the rails 61, 61 and sliders 62, 62 are members of the moving mechanism 60 which permits free movement of the wind screen 51, and the sliders 62, 62 slide between the lowest position L0 and highest position H0 as shown in Fig. 3. The sliders 62, 62 are passed through the openings 56, 56 and exposed above the inner cowl 55 and the wind screen 51 is coupled with the top of the sliders 62, 62 through the connecting plates 52 so that the wind screen 51 moves from the lowest position L1 to the highest position H1 as shown in Fig. 2.

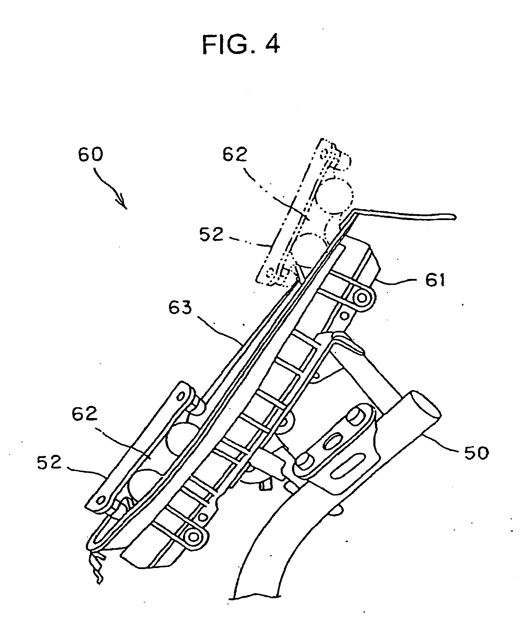

Fig. 4 is a side view showing the moving mechanism 60 and its vicinity.

The moving mechanism 60 includes: a pair of left and right rails 61, 61 which are fixed on the bracket 50 and extend up backward; a pair of left and right sliders 62, 62 which engage with the rails 61, 61; and a pair of left and right seal rubbers 63, 63 which cover the openings 56, 56 and are in sliding contact with the left and right sides of the sliders 62, 62 respectively.

Regarding the pairs of left and right rails 61, 61, sliders 62, 62 and seal rubbers 63, 63, the left ones are almost similar to the right ones; therefore, hereinafter the left rail 61, slider 62 and seal rubber 63 will be described and descriptions of the right rail 61, slider 62 and seal rubber 63 are omitted.

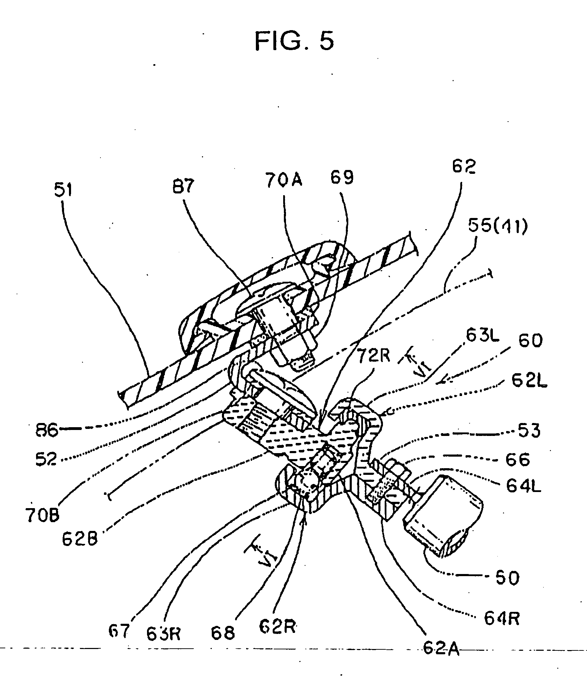

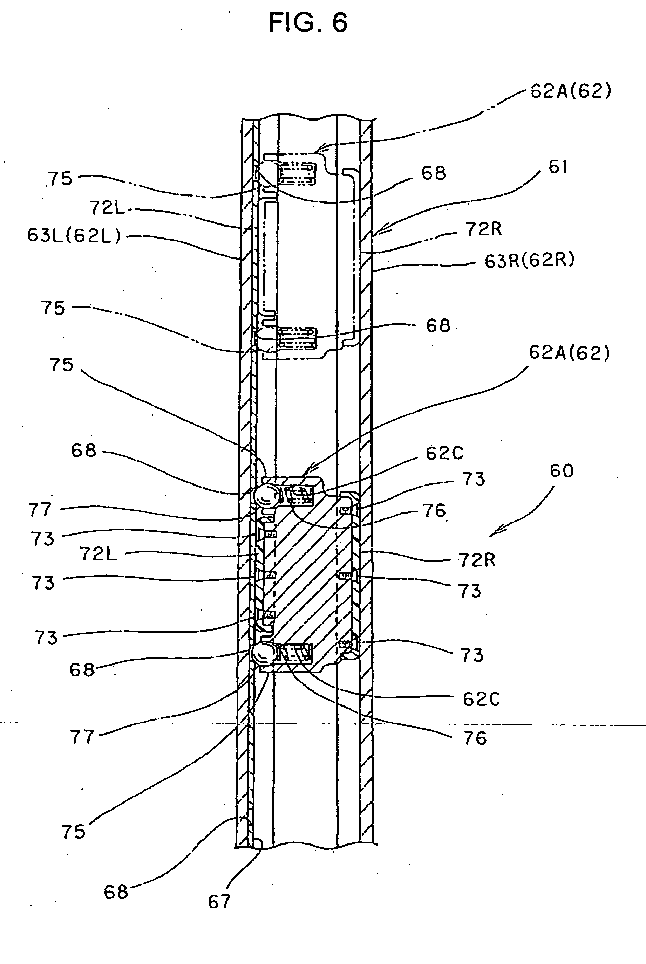

Fig. 5 is a sectional view showing the rail 61, slider 62 and its vicinity; and Fig. 6 is a sectional view taken along the line VI-VI in Fig. 5. In this figure, the seal rubber 63 is omitted.

As shown in Fig. 5, the rail 61 is divided into a left half and a right half, or constituted by a cast rail left half 62L and a cast rail right half 62R. The rail left half 62L and the rail right half 62R are almost symmetrical to each other and integrally have almost U-shaped rail parts 63L and 63R and base parts 64L and 64R extending from ends of the rails 63L and 63R, and the base parts 64L, 64R, placed one upon the other, are fixed on the connecting member 53 provided on the bracket 50 with a bolt 66.

As shown in Fig. 5, a positioning plate 67 is attached to the inner face of the rail part 63L of the rail left half 62L and as shown in Fig. 6, the positioning plate 67 extends in the longitudinal direction of the rail part 63L and a plurality of positioning holes 68 are formed and spaced apart.

As shown in Fig. 5, the slider 62 has a base part 62A inserted between the rail parts 63L, 63R of the rail 61 and an extension part 62B extending from the base part 62A; a connecting plate 52 is attached to the extension part 62B through a connecting screw 86 and the wind screen 51 is attached to the connecting plate 52 through a connecting screw 87 and a nut 69. In the figure, reference numerals 70A and 70B denote washers.

As shown in Fig. 6, guide plates 72L, 72R which have a low friction property and a high wear-resistance are fixed on the left and right sides of the base part 62A with a plurality of screws 73 respectively and the guide plates 72L, 72R are molded components, for example, of polytetrafluoroethylene or polyethylene or polyethylene terephthalate and the guide plates 72L, 72R constitute the slider 62's left.and right sliding surfaces which slide on the inner face of the rail 61.

Lock mechanisms 75, 75 which lock the slider 62 on the rail 61 are provided on the body outside (left) of the base part 62A at the front and back of the guide plate 72L. The lock mechanisms 75, 75 include compression coil springs 76, 76 housed in holes 62C, 62C at the front and back of the base 62A, and hard balls 77, 77 biased toward the body outside by the compression coil springs 76, 76; and as these hard balls 77, 77 engage with positioning holes 68 formed in the positioning plate 67 inside the rail 61 respectively, the slider 62 is locked on the rail 61.

On the other hand, when an external force is applied to the slider 62 in the sliding direction, the external force functions as a force which moves the hard balls 77 in such a direction as to compress the compression coil springs 76 and consequently the compression coil springs 76 compress and the hard balls 77 are disengaged (unlocked) and the slider 62 moves in the sliding direction. Therefore, for example, if an external force is applied to the slider 62 upward as seen in Fig. 6, the slider 62 moves upward as seen in Fig. 6 and the hard balls 77 are engaged with the positioning holes 68 existent in that direction to lock the slider 62 in the position as indicated by the chain double-dashed line in Fig. 6.

As the slider 62 moves, the wind screen 51 coupled with the slider 62 also moves and thus the wind screen 51 can be adjusted to various heights and locked.

In this embodiment, the height of the wind screen 51 is designed to be manually adjusted; for example, simply by the rider moving up or down the wind screen 51 manually, the wind screen 51 can be adjusted to various heights and locked. In this case, since the guide plates 72L, 72R, which are highly slidable, are provided on the left and right sides of the base part 62A, the slider 62 moves smoothly and is locked with the hard balls 77 in the positioning holes 68 so that it is smoothly locked and unlocked, giving a light, smooth operation feeling.

Location of the lock mechanism 75 is not limited to the body outside but they may be located on the body inside or on both the body inside and outside and also another type of lock mechanism may be used. In addition, the wind screen 51 may be moved up and down by a driving source such as an electrical motor instead of by manual operation.

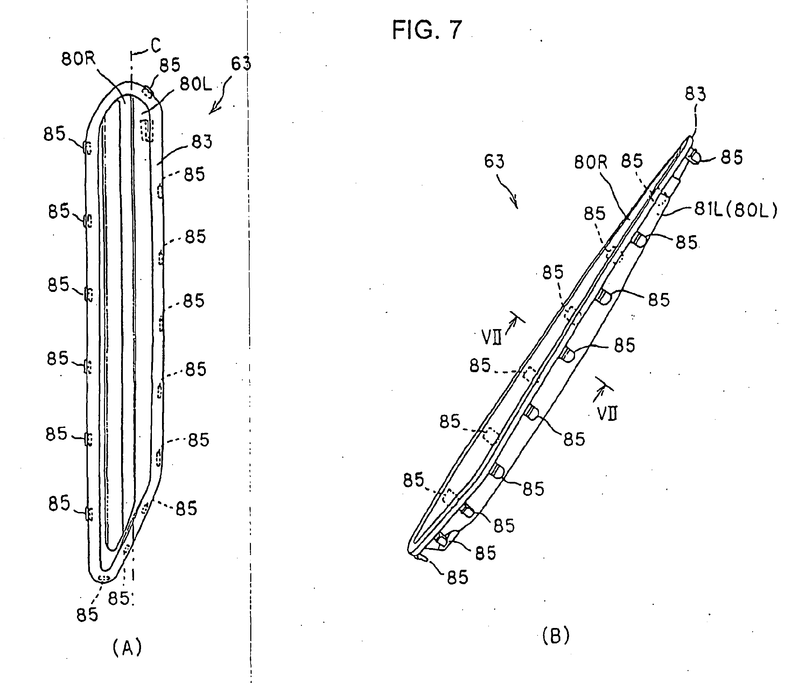

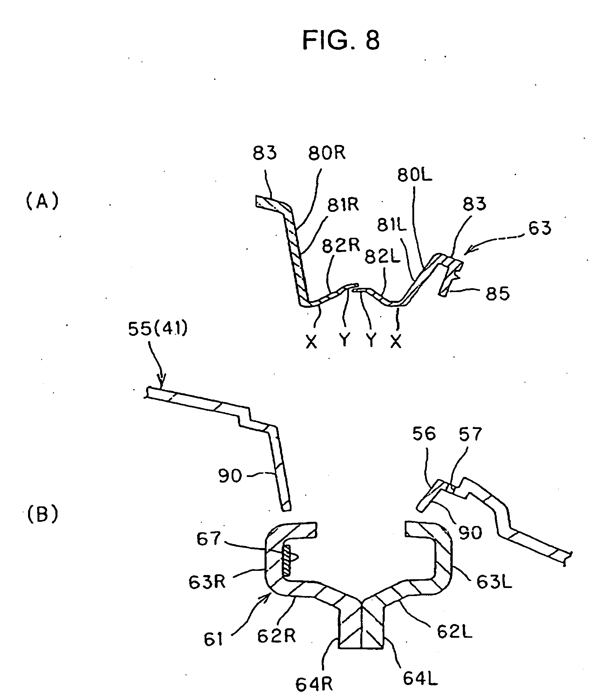

Fig. 7(A) is a plan view of the seal rubber 63 and Fig. 7(B) is a side view of it and Fig. 8(A) is a sectional view taken along the line VII-VII in Fig. 7(B). The seal rubber 63, made of an elastic material such as rubber, has: a pair of almost bowl-shaped left and right seal rubber parts 80L, 80R which extend in a way to cover the openings 56, 56 of the inner cowl 55 (upper cowl 41), and a peripheral part 83 which is integrally connected with base parts 81 L, 81 R of the seal rubber parts 80L, 80R and endlessly lies along the rim of the opening 56.

As shown in Fig. 7(A), when viewed from above, the pair of left and right seal rubber parts 80L, 80R are located on the body left side (body outside) and body right side (body inside) with almost the center in the width direction of the seal rubber 63 (indicated by alternate long and short dash line C in the figure) as the dividing line, and as a whole, are so shaped as to almost fit the shape of the opening 56 when viewed from above.

As shown in Fig. 8(A), the seal rubber parts 80L, 80R integrally has: base parts 81 L, 81 R which extend obliquely downward from the peripheral part 83; and lip parts (sliding contact parts) 82L, 82R which bend from the base parts 81 L, 81 R and extend almost horizontally. Because bend parts X, X, boundaries from the base parts 81 L, 81 R, are somewhat thinner than the base parts 81 L, 81 R, these lip parts 82L, 82R are flexible and easy to curve and also thanks to further thinner tip parts Y, Y, they are more flexible and easier to curve. Regarding the left and right seal rubber parts 80L, 80R, the tip part Y of the lip part 82R on the body inside (right) extends above the tip part Y of the lip part 82L on the body outside (left) and the tip parts Y, Y of the lip parts 82R, 82L lie one over the other so that the gap between the lip parts 82R, 82L is invisible from outside.

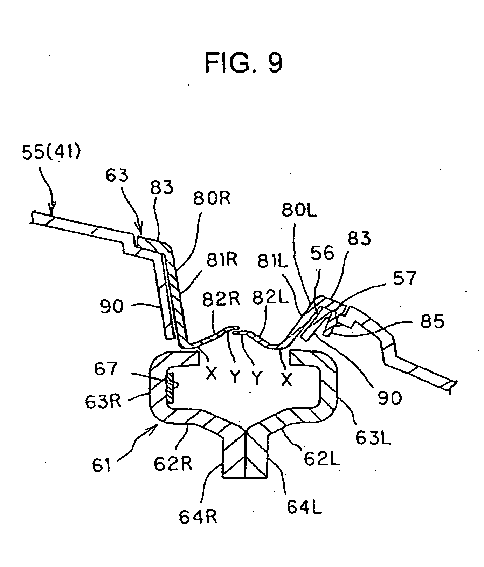

Furthermore, as shown in Figs. 7(A), 7(B) and 8(A), hooks 85 for hooking the inner cowl 55 are provided at regular intervals on the peripheral part 83 of the seal rubber 63 and as shown in Fig. 8(B), insertion holes 57 in which the hooks 85 are inserted are formed at regular intervals around the opening 56 of the inner cowl 55. Therefore, as shown in Fig. 9, when the hooks 85 on the seal rubber 63 are inserted into the insertion holes 57 of the inner cowl 55, the hooks 85 are hooked to the inner cowl 55 so that the seal rubber 63 is attached to the inner cowl 55.

In this case, as shown in Fig. 9, the lip parts 82L, 82R of the left and right seal rubber parts 80L, 80R, located adjacent to the upper surface of the rail 61, cover the rail 61 in a way to make the rail 61 invisible from outside, thereby preventing penetration of dust, sand, insects, rainwater, etc. from outside.

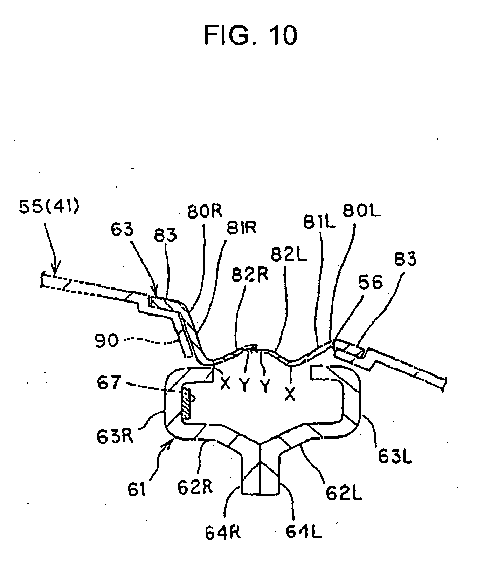

The distance between the inner cowl 55 and rail 61 is not always constant and as shown in Fig. 10, there is a point where the inner cowl 55 and rail 61 are close to each other. The reason for this is that while the inner cowl 55 is gradually inclined toward the rear of the body from the viewpoints of body styling and flow adjustment performance as shown in Fig. 3, the rail 61 is sharply inclined toward the rear of the body so that the wind screen 51 in a higher position is more vertical (the inclination angle is smaller) as shown in Fig. 4.

In this constitution, the seal rubber 63 is so formed that as shown in Fig. 10,even though the distance between the inner cowl 55 and rail 61 changes, the lip parts 82L, 82R of the left and right seal rubber parts 80L, 80R are located adjacent to the upper surface of the rail 61 like the case of Fig. 9: namely the lip parts 82L, 82R are located along the rail 61, and the distance between the lip parts 82L, 82R and the rail 61 is always constant.

In this embodiment, as shown in Fig. 9, a pair of left and right ribs 90, 90 which extend obliquely downward from the rim of the opening 56 are integrally formed with the inner cowl 55. More specifically, these ribs 90, 90 extend, adjacently to the base parts 81 L, 81 R of the pair of left and right seal rubber parts 80L, 80R respectively with an inclination angle almost similar to that of the base parts 81 L, 81 R, down to the vicinity of the rail 61 located below the inner cowl 55.

Here, although these ribs 90, 90 are basically formed along the base parts 81 L, 81 R of the seal rubber parts 80L, 80R across their longitudinal direction, when the inner cowl 55 and the rail 61 are close to each other and there is no space for a rib 90 as shown in Fig. 10, the rib 90 is omitted; a rib 90 is formed only on a side where there is such space.

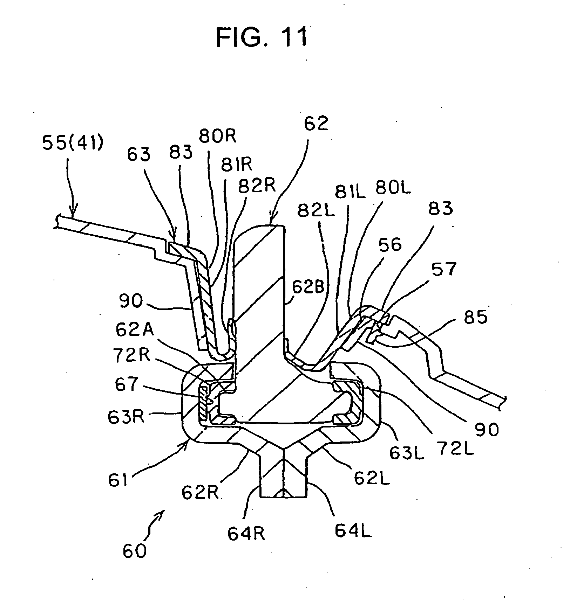

By providing the ribs 90 extending along the outside of the base parts 81 L, 81 R of the seal rubber parts 80L, 80R in this way, when the seal rubber parts 80L, 80R are expanded by the slider 62 as shown in Fig. 11, the ribs 90, 90 suppress deformation of the base parts 81 L, 81 R of the seal rubber parts 80L, 80R and permit only the lip parts 82R, 82L to be deformed.

In this case, since the lip parts 82R, 82L are flexibly curved, the lip parts 82R, 82L close at points P1, P2 near the end parts 62T1, 62T2 of the slider 62 in the sliding direction, which reduces the size of gaps S1, S2 at the front and back (top and bottom) of the slider 62 in the sliding direction. This makes it possible to avoid such a situation that large gaps are made at the front and back (top and bottom) of the slider 62 and the appearance worsens, and such a situation that dust, sand, insects, rainwater, etc. penetrate through such gaps.

If the ribs 90, 90 should not be provided, as the seal rubber parts 80L, 80R are expanded by the wide slider 62, the whole seal rubber parts 80L, 80R, including not only the lip parts 82R, 82L of the seal rubber parts 80L, 80R but also their base parts 81 L, 81 R, would be largely deformed and thus the gaps S1, S2 at the front and back of the slider 62 in the sliding direction would be large.

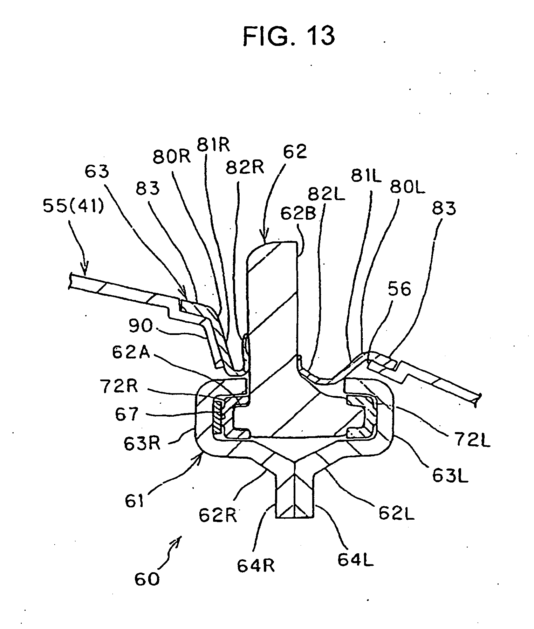

On the other hand, if a rib 90 exists only on one side as shown in Fig. 13, outward deformation of the base part 81 R, the longer of the seal rubber parts 80L, 80R, is effectively suppressed and therefore, in this case as well, the gaps S1, S2 at the front and back of the slider 62 are small.

As explained so far, according to this embodiment, in the opening 56 through which the slider 62 of the inner cowl 55 passes, the rib 90 which extends almost downward from the opening 56 is provided and when the seal rubber 63 located in the opening 56 is expanded by the slider 62 or in a similar situation, deformation of the base parts 81 L, 81 R of the seal rubber 63 is suppressed. Therefore, only the lip parts 82R, 82L of the seal rubber 63 are deformed and the gaps S1, S2 at the front and back of the slider 62 are always small.

The rib 90 improves the rigidity of the inner cowl 55, particularly around the opening 56, and the rib 90 lies across the front and back of the inner cowl 55, so it is easy to assure the rigidity of the inner cowl 55 as a whole.

Besides, since the tip parts Y, Y of the lip parts 82R, 82L of the seal rubber 63 lie one over the other, the gaps in the seal rubber 63 in an area which is not in sliding contact with the slider 62 are unfailingly closed and the seal rubber 63 is closed at points nearer to the end parts 62T1, 62T2 of the slider 62 in the sliding direction to make the gaps S1, S2 of the seal rubber 63 smaller.

Furthermore, since the lip parts 82L, 82R of the seal rubber 63 are located along the rail 61, the distance between the lip parts 82L, 82R and the rail 61 is always constant, so the lip parts 82L, 82R are always in sliding contact with the slider 62 at the same points. Therefore, since the deformed shape of the lip parts 82R, 82L is stable, foreign matter blocking performance and good external appearance are stably ensured.

Moreover, since the lip parts 82R, 82L of the seal rubber 63 are in sliding contact with the slider 62 in the vicinity of the rail 61, the lip parts 82R, 82L are in sliding contact with the narrow part between the slider 62's base part 62A and extension part 62B tip (to be connected with the connecting plate 52), thereby reducing the gaps S1, S2 in the seal rubber 63.

In the seal rubber 63 in this embodiment, the tip parts Y, Y of its lip parts 82R, 82L lie one over the other; therefore, in a normal molding process, because the mold is opened/closed in only one direction, the tip parts Y, Y which overlap would form undercuts; however, because the seal rubber 63 is made of a soft material such as rubber, the parts can be released from the mold even when the mold is opened/closed in only one direction. However, in this case, because of the thinness of the tip parts Y, Y of the lip parts 82R, 82L, there may be a case that the tip parts Y, Y fail to be demolded or remain in the mold.

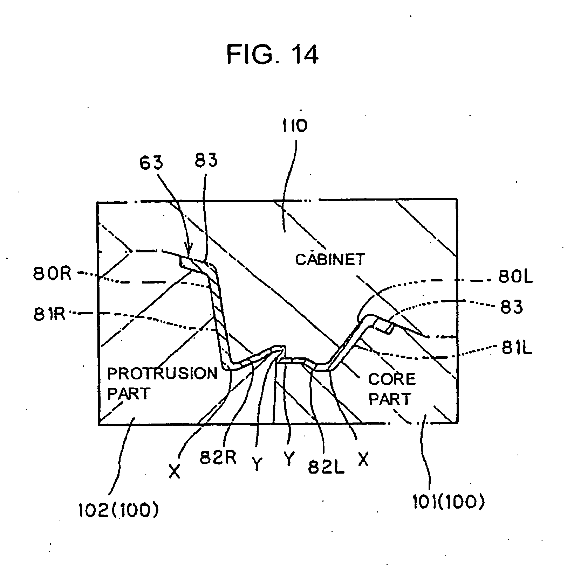

Therefore, in this embodiment, as shown in Fig. 14, the mold core 100 is divided into a core part 101 for formation of the seal rubber part 80L and a protrusion part 102 for formation of the other seal rubber part 80R so that after separation of the core part 101 from the cabinet part 110, only the protrusion part 102 is left and the seal rubber 63 can be easily taken out without undercuts. Consequently, such a situation that the tip parts Y, Y of the lip parts 82R, 82L remain in the mold can be avoided and because the core 100 is divided into two parts, a core part 101 and a protrusion part 102, it is easy to make the mold.

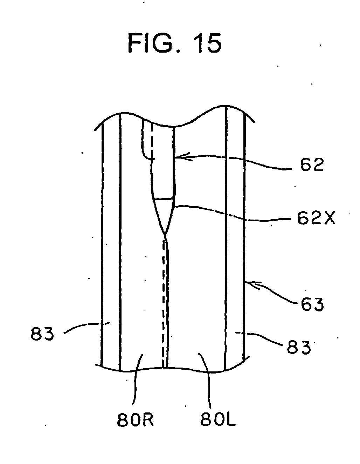

So far, one.embodiment of the present invention has been described; however, the present invention is not limited thereto and can be modified in design in various ways as defined in the claims. For example, as shown in Fig. 15, at an end part of the slider 62 in the sliding direction, there may be provided a gap closing part 62X which comes to have almost the same shape as the gap (correspond to the gap S1 or S2) in the seal rubber 63 as formed by the slider 62. When this gap closing part 62X is provided, the gap closing part 62X lies over the gap in the seal rubber 63 as expanded by the slider 62, which makes the gap between the seal rubber 63 and the slider 62 very small. The gap closing part 62X may be provided only at one end of the slider 62 or at both ends of it.

Furthermore, although the embodiment described above concerns the wind screen structure of the motorcycle 10 to which the present invention is applied, the invention may also be widely applied to another type of motorcycle such as a scooter type vehicle.

The invention is directed to provide a motorcycle having a wind screen structure which can reduce the size of a gap in a seal rubber.

The motorcycle has a wind screen structure which includes a rail 61 located below an upper cowl 41 and a slider 62 which is engageable with the rail 61 and is slidable; the upper cowl 41 has an opening 56 for the passage of the slider 62 and a wind screen 51 is coupled with the top of the slider 62; in the opening 56 of the upper cowl 41, a seal rubber 63 which extends from both sides of it and is in sliding contact with the slider 62 is located; and a rib 90 which extends downward from the opening 56 to suppress deformation of a base part of the seal rubber 63 is provided.

## Claims

1. A motorcycle having a wind screen structure which is adapted to slidably support a wind screen (51) on an upper cowl (41) covering a body front part, comprising:
a rail (61) located below the upper cowl (41); and
a slider (62) which is engageable with the rail (61) and is slidable,
wherein: the upper cowl (41) has an opening (56) for the passage of the slider (62) and the wind screen (51) is coupled with the top of the slider (62),
**characterized in that**
in the opening (56), a seal rubber (63) which extends from both sides of it and is in sliding contact with the slider (62) is located; and
a rib (90) which extends downward from the opening (56) to suppress deformation of a base part of the seal rubber (63) is provided.

2. The motorcycle according to Claim 1, wherein tips of a pair of lip parts (82L, 82R) which extend from the base part of the seal rubber (63) lie one over the other.

3. The motorcycle according to Claim 2, wherein the pair of lip parts (82L, 82R) which extend from the base part of the seal rubber (63) are located along the rail (61) and the lip parts (82L, 82R) are in sliding contact with the slider (62) in the vicinity of the rail (61).

4. The motorcycle according to any of Claims 1 to 3, wherein a gap closing part (62X) which has almost the same shape as a gap in the seal rubber (63) as formed by the slider (62) is provided at an end part of the slider (62) in a sliding direction.

## Patentansprüche

1. Kraftrad mit einer Windschutzscheibenstruktur, welche dazu ausgebildet ist, eine Windschutzscheibe (51) auf einer oberen Verkleidung (41), welche ein Körpervorderteil abdeckt, verschiebbar abzustützen, umfassend:
eine Schiene (61), welche unter der oberen Verkleidung (41) angeordnet ist; und
einen Schieber (62), welcher mit der Schiene (61) in Eingriff bringbar ist und verschiebbar ist,
wobei: die obere Verkleidung (41) eine Öffnung (56) für den Durchgang des Schiebers (62) aufweist und die Windschutzscheibe (51) mit dem oberen Ende des Schiebers (62) gekoppelt ist,
**dadurch gekennzeichnet, dass**
ein Dichtungsgummi (63) in der Öffnung (56) angeordnet ist, welcher sich von beiden Seiten derselben aus erstreckt und in Gleitkontakt mit dem Schieber (62) ist; und
eine Rippe (90) vorgesehen ist, welche sich von der Öffnung (56) nach unten erstreckt, um eine Verformung eines Basisteils des Dichtungsgummis (63) zu unterdrücken.

2. Kraftrad nach Anspruch 1, wobei Spitzen eines Paars von Lippenteilen (82L, 82R), welche sich von dem Basisteil des Dichtungsgummis (63) aus erstrecken, übereinander liegen.

3. Kraftrad nach Anspruch 2, wobei das Paar von Lippenteilen (82L, 82R), welche sich von dem Basisteil des Dichtungsgummis (63) aus erstrecken, entlang der Schiene (61) angeordnet sind und die Lippenteile (82L, 82R) mit dem Schieber (62) in der Nähe der Schiene (61) im Gleitkontakt sind.

4. Kraftrad gemäß einem der Ansprüche 1 bis 3, wobei ein Spaltschließendes Teil (62X), welches annähernd dieselbe Form wie ein Spalt in dem Dichtungsgummi (63) hat, wie er von dem Schieber (62) ausgebildet wird, an einem Endteil des Schiebers (62) in einer Schieberichtung vorgesehen ist.

## Revendications

1. Motocycle muni d'une structure de pare-brise qui est adaptée pour supporter à coulissement un pare-brise (51) sur un auvent supérieur (41) couvrant une partie avant de carrosserie, comprenant :
un rail (61) situé au-dessous de l'auvent supérieur (41) ; et
un coulisseau (62), susceptible d'être mis en prise avec le rail (61) et susceptible de coulisser,
dans lequel : l'auvent supérieur (41) présente une ouverture (56), pour le passage du coulisseau (62), et le pare-brise (51) est couplé à la partie supérieure du coulisseau (62),
**caractérisé en ce que**,
dans l'ouverture (56), est disposé un joint d'étanchéité en caoutchouc (63), qui s'étend depuis les deux côtés de celle-ci et est en contact coulissant avec le coulisseau (62) ; et
une nervure (90) est prévue, s'étendant vers le bas depuis l'ouverture (56), pour supprimer toute déformation d'une partie de base du joint d'étanchéité en caoutchouc (63).

2. Motocycle selon la revendication 1, dans lequel des extrémités d'une paire de parties formant lèvres (82L, 82R), s'étendant à partir de la partie de base du joint d'étanchéité en caoutchouc (63), sont situées l'une au-dessus de l'autre.

3. Motocycle selon la revendication 2, dans lequel la paire de parties formant lèvres (82L, 82R), s'étendant à partir de la partie de base du joint d'étanchéité en caoutchouc (63), sont situées le long du rail (61) et les parties formant lèvres (82L, 82R) sont en contact coulissant avec le coulisseau (62), à proximité du rail (61).

4. Motocycle selon l'une quelconque des revendications 1 à 3, dans lequel une partie de fermeture d'interstice (62X), ayant pratiquement la même forme qu'un interstice dans le joint d'étanchéité en caoutchouc (63), tel que formé par le coulisseau (62), est prévue en une partie d'extrémité du coulisseau (62), dans une direction de coulissement.
